# EUROPÄISCHE PATENTSCHRIFT

(11) **EP 2 971 840 B1**
(45) Veröffentlichungstag und Bekanntmachung des Hinweises auf die Patenterteilung: **11.12.2019**
(21) Anmeldenummer: 14708876.9
(22) Anmeldetag: 10.03.2014
(51) Int. Cl.: F16D 65/18

(54) **ELEKTRISCH BETÄTIGTE REIBUNGSBREMSE**
ELECTRICALLY ACTUATED FRICTION BRAKE
FREIN À FRICTION À COMMANDE ÉLECTRIQUE

(30) Priorität: 11.03.2013 AT 501652013
(43) Veröffentlichungstag der Anmeldung: 20.01.2016
(60) Teilanmeldung: 16165705.1
(73) Patentinhaber: VE Vienna Engineering Forschungs- und Entwicklungs GmbH, 1010 Wien (AT)
(72) Erfinder: PUTZ, Michael, A-8272 Sebersdorf (AT)
(74) Vertreter: Patentanwälte Pinter & Weiss OG
(86) Internationale Anmeldenummer: PCT/EP2014/054531
(87) Internationale Veröffentlichungsnummer: WO 2014/139919

(56) Entgegenhaltungen:
- WO-A1-01/44677
- WO-A1-01/44677
- WO-A1-01/44677
- DE-A1- 3 824 812
- DE-A1- 3 824 812
- DE-A1- 3 824 812
- DE-A1- 10 140 075
- DE-A1- 19 723 394
- US-A1- 2010 025 165
- US-A1- 2010 025 165

## Beschreibung

Die gegenständliche Erfindung betrifft eine elektrisch betätigte Reibungsbremse mit einem von einer Betätigungseinrichtung betätigten Bremsbelag, wobei die Betätigungseinrichtung von einem elektrischen Aktuator angetrieben ist, und ein erstes Übertragungsglied umfasst, das mit dem Bremsbelag verbunden ist und die Betätigungseinrichtung für eine Bremsung zur Erzielung einer Belagsandrückkraft das erste Übertragungsglied um einen Verdrehwinkel verdreht und das erste Übertragungsglied zur Erzielung der Belagsandrückkraft in Abhängigkeit vom Verdrehwinkel ein Eingangsmoment benötigt.

Die gegenständliche Erfindung betrifft elektrisch betätigte Bremsen, also Bremsen, bei denen ein elektrischer Aktuator, wie z.B. ein Elektromotor, über Übertragungsteile wie Hebel, Schrauben, Kugelspindeln, Nocken, Exzenter, Flüssigkeiten, Gase, etc. den Bremsbelag, wie z.B. eine Bremsscheibe, an die Reibfläche, wie z.B. eine Bremsscheibe oder Bremstrommel, andrückt. Die Gestaltung des Kraftverlaufes über den Betätigungsweg ist bei elektrisch betätigten Bremsen für die Betätigungszeit und den Energieaufwand zum Aufbringen des Bremsmoments wichtig.

Eine elektrisch bestätigte Bremse geht z.B. aus der DE 38 24 812 A1 in Form einer Trommelbremse hervor. Die WO 01/44677 A1 zeigt eine Zuspanneinrichtung für eine Radbremse, die elektrisch betätigt sein kann. Die US 2010/0025165 A1 zeigt eine Art Keilbremse, bei der das Übersetzungsverhältnis von Längsraft in X-Richtung zu Querkraft (Andrückkraft) in Y-Richtung mittels eines Umlenkmechanismus veränderbar ist.

Besonders für elektrisch betätigte Betriebsbremsen von Fahrzeugen gelten hohe Anforderungen bezüglich kurzer Betätigungszeiten und Bedarf an Anpresskraft. Z.B. wird für heutige Fahrzeuge eine Betätigungszeit für eine Vollbremsung von ca. 200ms gefordert. Dabei können an heutigen Fahrzeug Vorderrad-Scheibenbremsen Belagsandrückkräfte von 30 bis 40kN auftreten, in manchen Fällen auch deutlich mehr. Da Betätigungsweg * Belagsandrücckraft der Energiebedarf für das Betätigen der Bremse ist und bei gegebener Betätigungszeit zur benötigten Betätigungsleistung führt, wird klar, dass die elektrischen Aktuatoren entsprechend große elektrische Leistungen brauchen. Wenn für 40kN Belagsandrückkraft ein Betätigungsweg von 2 mm für eine Vollbremsung zurückgelegt wird, ist der Energiebedarf grob 40Ws. Wenn der Bremsvorgang dabei in 0.2 sec durchgeführt wird, wird eine mittlere mechanische Leistung von mindestens 200W pro Bremse benötigt, die vom elektrischen Aktuator aufzubringen ist. Verfügbarer Bauraum, Gewicht, Kosten und Strombedarf für den elektrischen Aktuator bedingen aber, die Motorleistung gering zu halten, weshalb kein beliebig großer elektrischer Aktuator einsetzbar ist.

Bei einer linearen elektrisch betätigten Bremse, also bei linearen Übertragungsgliedern, wie z.B. Schrauben, Kugelspindeln, Flüssigkeiten, mit einem linearem Verhältnis zwischen Betätigungsweg und Aktuator (Kraft, Moment), wird an der Reibfläche mit steigendem Bremsmoment, unter der Annahme eines konstanten Reibbeiwerts, eine linear von Null bis zum Maximalwert steigende Belagsandrückkraft notwendig. Das erforderliche Übersetzungsverhältnis der linearen Bremse wird dabei von der benötigten Maximalkraft (Vollbremsung) bestimmt, da diese garantiert werden muss, und bleibt für alle kleineren Belagsandrückkräfte konstant. Das ist aber ungünstig, da in allen anderen, in der Regel häufigeren Fällen, der elektrische Aktuator nicht optimal ausgenutzt werden kann und überdimensioniert ist. Bei einer solchen linearen Bremse wird der elektrische Aktuator folglich bis zur ausgelegten Vollbremsung mit geringerer als der möglichen Last betrieben, wobei Übersetzungsverhältnis und damit auch erreichbare Betätigungszeit aber von der konstant hohen Untersetzung bestimmt wird, die der Vollbremsfall vorgibt. Damit können bei linearen Bremsen für Bremsungen, die nicht dem Vollbremsfall entsprechen, keine optimalen bzw. möglichst kurze Betätigungszeiten erzielt werden.

Außerdem ist auch der Kostendruck auf elektrisch, betätigte Bremsen hoch, weil sie mit den relativ einfachen Hydraulikbremsen konkurrieren müssen. Daher ist jede mögliche Kostenoptimierung am elektrischen Aktuator wichtig. Dabei gilt, je kleiner der elektrische Aktuator gehalten werden kann, umso günstiger wird dieser.

Eine Verbesserung zu linearen Bremsen bringen nichtlineare, elektrisch betätigte Bremsen, wie z.B. in der WO 2010/133463 A1 beschrieben, bei denen ein nichtlineares Übertragungsglied, wie z.B. eine Nocke, ein Exzenter, eine nichtlineare Rampe, etc., zwischen Aktuator und Bremsbelag vorgesehen ist. In der WO 2010/133463 A1 wird z.B. eine Welle mit einem exzentrischer Zapfen oder einer Nocke, an dem der Bremsbelag befestigt ist, von einem Betätigungsmittel verdreht. Dabei wird das Drehmoment eines Elektromotors über ein Gestänge und Hebel auf das nichtlineare Übertragungsglied der Bremse übertragen. Durch die Exzentrizität des Zapfens bzw. der Nocke wird der Bremsbelag an die Reibfläche angedrückt, wobei sich ein nichtlinearer Zusammenhang zwischen Betätigungsweg bzw. Verdrehwinkel der Welle und der Belagsandrückkraft bzw. dem entstehenden Bremsmoment ergibt. Dabei entsteht durch den Exzenter bzw. der Nocke auch eine Kraftübersetzung (ein kleiner Weg bewirkt eine hohe Kraft), womit der elektrische Aktuator kleiner dimensioniert werden kann. Dadurch lassen sich auch die Betätigungszeiten gegenüber einer linearen elektrisch betätigten Bremse verkürzen.

In der Regel sind die Einbauverhältnisse der Bremse, insbesondere bei Fahrzeugbremsen, so, dass nur ein sehr beschränkter Bauraum für die Aufnahme der Bremse verfügbar ist, weshalb Elektromotoren kleiner Baugröße verwendet werden müssen. Dabei muss aus der hohen Drehzahl des bevorzugt kleinen Elektromotors auch die sehr hohe Anpresskraft des Bremsbelages erzeugt werden. Das kann anstelle eines Gestänges und des Hebels der WO 2010/133463 A1 z.B. auch durch ein vom Elektromotor angetriebenes Getriebe erzielt werden. Dabei verdreht z.B. die Ausgangsstufe des Getriebes die im Getriebe integrierte Welle mit dem Exzenter bzw. der Nocke, wobei das nichtlineare Übertragungsglied wiederum auf den Bremsbelag wirkt. Mit einem solchen Getriebe lassen sich auf kleinstem Bauraum auch Übersetzungen von 1:40 realisieren, womit kleine Elektromotoren verwendet werden können. Damit kann die Betätigungszeit noch weiter reduziert werden. Allerdings sind solche Getriebe sehr aufwendig und daher auch teuer.

Aus der WO 01/90595 A1 ist eine Feststellbremse bekannt, bei der ein Bremsstell-Gestänge von einer elektrisch angetriebenen Antriebsverbindung betätigt wird. Die Antriebsverbindung ist in Form einer Kurvenscheibe, die vom Elektromotor verdreht wird, und einem entlang einer Fläche der Kurvenscheibe geführten Verstellelement ausgebildet. Die Kurvenscheibe kann dabei so ausgeführt sein, dass sich am Elektromotor ein konstantes Drehmoment einstellt, um die Bremszeit zu verkürzen und eine besonders schnelle Translationsbewegung des Bremsstell-Gestänges zu erzielen.

Zum Lösen einer Reibungsbremse wird oftmals eine Rückstellfeder gespannt, die beim Lösen der Reibungsbremse entspannt und durch die dabei freigesetzte Energie die Reibungsbremse öffnet. Z.B. zeigt die DE 10 2006 012 076 A1 eine elektrisch betätigte Reibungsbremse, bei der während der Betätigung eine Rückholfeder gespannt wird und zum Lösen die Rückholfeder entspannt wird. Der elektrische Antrieb muss damit während der gesamten Betätigung der Reibungsbremse Energie zum Spannen der Lösefeder aufbringen.

Es ist nun eine Aufgabe der gegenständlichen Erfindung, die erzielbaren Betätigungszeiten einer elektrisch betätigten Reibungsbremse noch weiter zu reduzieren und gleichzeitig die Reibungsbremse kostengünstig zu halten sowie eine möglichst gleichbleibende Bremswirkung über die Lebensdauer der Reibungsbremse zu gewährleisten.

Diese Aufgabe wird erfindungsgemäß dadurch erreicht, dass ein zweites Übertragungsglied mit einer Erhebungskurve und am ersten Übertragungsglied ein Koppelglied vorgesehen ist, wobei am Koppelglied ein Abtastelement angeordnet ist und das Abtastelement unter Wirkung des elektrischen Aktuators zur Betätigung des ersten Übertragungsgliedes die Erhebungskurve abtastet, wobei das zweite Übertragungsglied das Eingangsmoment für das erste Übertragungsglied aufbringt und die Eingangsmomente des ersten Übertragungsgliedes über den Verdrehwinkel für unterschiedliche Verschleißzustände des Bremsbelags eine Hüllkurve ergeben, welche die maximalen Werte der benötigten Eingangsmomente darstellt, und das vom zweiten Übertragungsglied aufgebrachte Eingangsmoment über den Verdrehwinkel gleich oder unterhalb der Hüllkurve liegt, um die unterschiedlichen Verschleißzustände des Bremsbelags (3) abzudecken. Das zweite Übertragungsglied kann viel der in der Betätigungseinrichtung benötigten Übersetzung aufbringen, womit der elektrische Aktuator entlastet wird. Im Beispiel eines Getriebemotors kann bei sonst gleicher Reibungsbremse die Übersetzung des Motorgetriebes von 1:40 auf bis zu 1:12 (im Falle eines nichtlinearen zweiten Übertragungsgliedes) reduziert werden, weil das zweite Übertragungsglied Kraftübersetzung (bzw. Momentenübersetzung) bringt. Damit kann eine Einsparung von 1 bis 2 Übersetzungsstufen im Motorgetriebe und damit einhergehend eine Kostenreduzierung erzielt werden. Gleichzeitig wird dadurch auch das Ausgangsmoment des elektrischen Aktuators kleiner, wodurch wesentlich kleinere Zahnräder im Motorgetriebe verwendet werden können, was wiederum einen weiteren Preisvorteil mit sich bringt. Durch die zusätzliche Übersetzung des zweiten Übertragungsgliedes wird aber auch die Betätigungszeit der Reibungsbremse reduziert. Umgekehrt kann bei einer zu erzielender Betätigungszeit die Motorgröße verkleinert werden. Gleichfalls kann damit über den gesamten Verschleißzustand der Reibungsbremse der Betrieb gewährleistet werden.

Die Verbindung des Koppelglied und des ersten Übertragungsgliedes erfolgt konstruktiv sehr einfach, wenn ein erstes Ende eines Hebels im Koppelglied drehbar gelagert angeordnet ist und ein zweites Ende des Hebels mit dem ersten Übertragungsglied verbunden ist.

Eine ganz besonders einfache und vorteilhafte Ausgestaltung ergibt sich, wenn das zweite Übertragungsglied als Kurvenscheibe oder als Kulissenführung mit einer Erhebungskurve ausgeführt ist und der elektrische Aktuator die Kurvenscheibe oder die Kulissenführung verdreht. Damit lässt sich die Betätigungseinrichtung mit einfachen und robusten konstruktiven Mittel und sehr kompakt realisieren.

Wenn zwei erste Übertragungsglieder vorgesehen sind, ist es vorteilhaft, wenn diese zur Ausbildung eines Parallelogrammantriebes jeweils über einen Hebel mit dem Koppelglied verbunden sind. Durch das Parallelogramm ergibt sich auf einfache und kostengünstige Weise eine zwangsweise Synchronisierung der beiden Übertragungsglieder.

In einer alternativen Ausgestaltung, ist das Koppelglied als Kniehebel ausgeführt, dessen Kniegelenk über das Abtastelement entlang der Erhebungskurve geführt ist, wobei an einem ersten Schenkel des Kniehebels der elektrische Aktuator angreift und der andere Schenkel des Kniehebels mit dem ersten Übertragungsglied verbunden ist. Durch den Kniehebel können besonders hohe Übersetzungen im zweiten Übertragungsglied realisiert werden.

Eine sehr einfache Parkbremsfunktion kann realisiert werden, wenn in der Erhebungskurve eine Einbuchtung vorgesehen ist, in der das Abtastelement eine stabile Lage einnimmt. Damit kann die Betätigungseinrichtung in einer bestimmten Position (Parkbremse) fixiert werden und kann nur mehr durch eine äußere Kraft gelöst werden.

Das erste Übertragungsglied ist bevorzugt als Exzenterantrieb oder als Nockenantrieb ausgeführt, da sich damit mit einfachen Mitteln hohe Übersetzungen bei kleinen Betätigungswegen realisieren lassen.

Ganz besonders vorteilhaft ist es, wenn die Erhebungskurve entsprechend der Wegübersetzungskennlinie des ersten Übertragungsgliedes geformt ist. Auf diese Weise kann ein im Wesentlichen konstantes Drehmoment des elektrischen Aktuators erreicht werden. Der elektrische Aktuator kann daher über den gesamten Betätigungsbereich der Betätigungseinrichtung immer in einem bestimmten Drehmomentenbereich, bei dem sich günstige Wirkungsgrade ergeben, betrieben werden.

Um eine selbsttätige Rückstellung der Reibungsbremse über den gesamten Betätigungsbereich zu realisieren, ist vorteilhaft eine Lösefeder vorgesehen, die auf die Betätigungseinrichtung wirkt. Wenn die Lösefeder über ein am ersten Übertragungsglied vorgesehenes Federabtastelement gespannt oder entspannt wird, kann der Bereich, in dem die Lösefeder gespannt oder entspannt wird, gezielt gesteuert werden. Damit kann die Lösefeder in bestimmten Bereichen des Betätigungsbereichs Hilfsenergie zur Rückstellung oder Betätigung der Reibungsbremse bereitstellen und in anderen Bereichen den elektrischen Aktuator bei der Betätigung oder der Rückstellung der Reibungsbremse unterstützen.

Weitere Effekte und Vorteile der gegenständlichen Reibungsbremse ergeben sich aus der nachfolgenden Beschreibung.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt
Fig.1 eine Darstellung einer erfindungsgemäßen Reibungsbremse,
Fig.2 eine alternative Ausführung der Betätigungseinrichtung,
Fig.3 die Belagsandrückkraft über den Betätigungsbereich des ersten Übertragungsgliedes,
Fig.4 das Eingangsmoment in das erste Übertragungsglied über dessen Betätigungsbereich,
Fig.5 die sich ergebende Momenten- und Wegübersetzungskennlinie des zweiten Übertragungsgliedes,
Fig.6 eine Darstellung einer erfindungsgemäßen Reibungsbremse mit Lösefeder,
Fig.7 das Moment aus der inneren Belagsandrückkraft über den Betätigungsbereich des elektrischen Aktuators,
Fig.8 das Rückstellmoment der Lösefeder über den Betätigungsbereich und
Fig.9 das Drehmoment des elektrischen Aktuators einer erfindungsgemäßen Reibungsbremse.

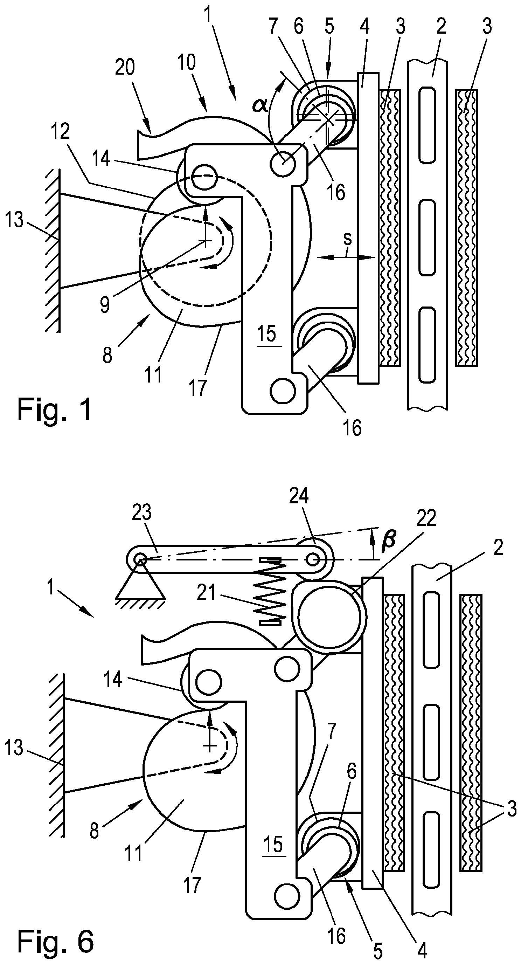

Fig.1 zeigt schematisch ein vorteilhaftes Ausführungsbeispiel einer erfindungsgemäßen Reibungsbremse 1, hier z.B. in Form einer Scheibenbremse mit einer Bremsscheibe als Reibfläche 2 und einem Bremsbelag 3, der über eine Betätigungseinrichtung 10 zum Bremsen an die Reibfläche 2 gedrückt wird. Die Reibungsbremse 1 könnte aber auch als Trommelbremse ausgeführt sein, und könnte natürlich auch lineare Bewegungen bremsen, also z.B. ein Flacheisen als Reibfläche anstatt einer Bremsscheibe. Der Bremsbelag 3 kann wie hier auch an einem Belagsträger 4 angeordnet sein. Die Reibungsbremse 1 kann z.B. als hinlänglich bekannte Schwimmsattelbremse ausgeführt sein. An sich bekannte Bauteile einer solchen Reibungsbremse 1, wie z.B. der Bremssattel sind aus Gründen der Übersichtlichkeit hier nicht dargestellt bzw. nur angedeutet.

Auf den Bremsbelag 3 bzw. den Belagsträger 4 wirkt ein mit dem Bremsbelag 3 (bzw. dem Belagsträger 4) verbundenes und damit zusammenwirkendes erstes Übertragungsglied 5. Das erste Übertragungsglied 5 ist hier z.B. als Betätigungswelle 6 ausgeführt, an der ein exzentrischer Zapfen 7 (angedeutet durch die versetzten Drehachsen) vorgesehen ist. Z.B. kann an der Betätigungswelle 6 ein exzentrischer Zapfen 7 angeformt sein oder es kann auch eine exzentrische, axiale Bohrung in der Betätigungswelle 6 vorgesehen sein, in die ein Zapfen 7 gesteckt ist. Die Betätigungswelle 6 ist an einem ortsfesten, beispielsweise dem Bremssattel, oder quasi ortsfesten Teil, beispielsweise ein Verschleißnachsteller, der Reibungsbremse 1 drehbar gelagert. Am Zapfen 7 ist der Bremsbelag 3 bzw. der Belagsträger 4 angeordnet. Wird die Betätigungswelle 6 um einen Verdrehwinkel α verschwenkt, wird der Bremsbelag 3 je nach Drehrichtung um den Betätigungsweg s zur Reibfläche 2 bewegt oder von dieser abgehoben (angedeutet durch den Doppelpfeil). Anstelle eines exzentrischen Zapfens 7 kann auch eine Nocke als Übertragungsglied 5 vorgesehen sein. Z.B. kann ein Verdrehwinkel α von 90° von nicht bremsend bis Vollbremsung vorgesehen sein, wobei der Exzenter oder die Nocke geometrisch ausgelegt sind, um den für die Bremsung notwendigen Betätigungsweg s zu gewährleisten. Diese Art der Betätigung einer Reibungsbremse 1 ist in der WO 2010/133463 A1 beschrieben.

Das Zustellen des Bremsbelages 3 zur Reibfläche 2 mittels erstem Übertragungsglied 5 erzeugt ab Kontakt eine Normalkraft (Belagsandrückkraft F_{N}), die die Bremskraft bzw. das Bremsmoment bewirkt. Die Normalkraft wird dabei vom ersten Übertragungsglied 5 erzeugt und auch zur Gänze von diesem aufgenommen. D.h. die Normalkraft wird zur Gänze durch das Übertragungsglied 5 abgestützt. Auch eine durch eventuell auftretende Selbstverstärkungseffekte erhöhte Normalkraft wird durch das Übertragungsglied 5 abgestützt.

Die Andrückung des Bremsbelags 3 gegen die Reibfläche 2 kann grundsätzlich mit jeder Geometrie und Methode gemacht werden, die "Höhengewinn", also Zustellweg Richtung Bremsbelag 3 bringt. Das erste Übertragungsglied 5 ist dabei bevorzugt nichtlinear ausgeführt. D.h., dass es keinen linearen Zusammenhang zwischen Eingang (hier z.B. Verdrehwinkel a) und Ausgang (hier z.B. der Betätigungsweg s) hat. Das erste Übertragungsglied 5 kann aber auch linear ausgeführt sein, z.B. als Nocke mit einer linearen Erhebungskurve. Das erste Übertragungsglied 5 ist auch als Kugelrampe oder abrollend mit Gewindegängen denkbar. Eine Nocke ist eine aufgewickelte schiefe Ebene, wobei die Aufwicklung auch abgerollt oder in beliebiger Kurve oder Fläche in Ebene oder Raum sein kann, als z.B. auch als Wendel oder Mehrfachwendel, wie z.B. eine Kugelrampe, Gewindegänge oder Abrollgänge. Ebenso kann das erste Übertragungsglied 5 auch einen Hydraulik- oder Pneumatikzylinder mit Kolben umfassen, der z.B. von einem Exzenter oder einer Nocke betätigt wird.

Erfindungsgemäß ist nun in der Reibungsbremse 1 ein zweites Übertragungsglied 8 vorgesehen, das mit dem ersten Übertragungsglied 5 wie nachfolgend beschrieben zusammenwirkt.

Das zweite Übertragungsglied 8 umfasst hier eine an einem Drehpunkt 9 drehbar gelagerte Kurvenscheibe 11 mit einer Erhebungskurve 17, die von einem elektrischen Aktuator 12, hier z.B. ein Elektromotor oder Getriebemotor, angetrieben wird. Die Kurvenscheibe 11 bzw. der elektrische Aktuator 12 stützen sich an einem ortsfesten Teil 13 der Reibungsbremse 1, wie z.B. einem Bremssattel oder einem nicht dargestellten, hinlänglich bekannten Verschleißnachsteller (der als quasi ortsfest angesehen wird), ab, wie in Fig.1 angedeutet. Auf der Kurvenscheibe 11 rollt ein Abtastelement 14, z.B. ein Nadellager, ab, wobei das Abtastelement 14 an einem Koppelglied 15 drehbar gelagert angeordnet ist. Je nach Form der Erhebungskurve 17 ist das zweite Übertragungsglied 8 damit linear oder nichtlinear. Am Koppelglied 15 sind hier weiters die Enden zweier Hebel 16 drehbar gelagert angeordnet. Die jeweils gegenüber liegenden Enden der Hebel 16 sind an der Betätigungswelle 6 befestigt. Mechanisch gesehen handelt es sich bei dem Koppelglied 15 um einen Rollenschlepphebel, der gleichzeitig Teil eines Parallelogrammgetriebes ist. Selbstverständlich könnte auch nur ein erstes Übertragungsglied 5 vorgesehen sein und damit auch nur ein Hebel 16 notwendig sein. Ebenso könnten auch mehr als zwei erste Übertragungsglieder 5 und damit auch mehr als zwei Hebel 16 vorgesehen sein.

Wird die Kurvenscheibe 11 durch den elektrischen Aktuator 12 z.B. im Uhrzeigersinn verdreht, rollt das Abtastelement 14 auf der Kurvenscheibe 11 ab, womit das Koppelglied 15 gemäß der Kurvenform der Kurvenscheibe 11 nach oben oder unten bewegt wird. Durch die Bewegung des Koppelgliedes 15 wird gleichzeitig über die Hebel 16 die Betätigungswelle 6 verdreht und der Bremsbelag 3 gegen die Reibfläche 2 gedrückt. Zum Abheben des Bremsbelags 3 von der Reibfläche 2 erfolgt die Verdrehung der Kurvenscheibe 11 in gegengesetzter Richtung.

Die Kinematik der Betätigungseinrichtung 10 der Reibungsbremse 1 besteht somit aus dem Wegübersetzungsverhältnis (bzw. äquivalent Kraft- oder Momentenübersetzungsverhältnis) des ersten Übertragungsglieds 5 und des zweiten Übertragungsglieds 10.

Die Erhebungskurve 17 des zweiten Übertragungsgliedes 10 kann anstatt einer Kurvenscheibe 11 auch durch eine Kulissenführung realisiert sein. Die Erhebungskurve 17 kann dabei auch mehrmals aufgewickelt oder räumlich geformt sein, sodass sich zwischen Anfangs- und Endposition ein Verdrehbereich von größer als 360° ergeben kann. Z.B. kann die Kurvenscheibe 11 wie eine Wendel geformt sein, wobei durch eine Vorschubeinrichtung, z.B. ein Gewinde, die Kurvenscheibe 11 immer richtig positioniert werden kann. Eine Kulissenführung könnte auch spiralförmig ausgeführt sein.

Die Erhebungskurve 17 der Kurvenscheibe 11 oder einer Kulissenführung oder allgemeiner einer beliebigen Erhebungskurve 17 im Raum oder in der Ebene kann natürlich auf jede mechanisch sinnvolle Art abgetastet werden, also neben dem beschriebenen Rollenschlepphebel auch mit Kipphebel oder anderer Führung des Abtastelements 14. Abgetastet kann natürlich auch anders als mit einem Wälzlager werden, so z.B. durch eine Rolle, einen gleitenden Kontakt oder eine Kugel. Unter Abtasten wird folglich das Abrollen oder Abgleiten des Abtastelements 14 an der Erhebungskurve 17 verstanden.

Das Koppelglied 15 kann dabei auch mehrteilig ausgeführt sein, z.B. mehrere gelenkig verbundene Glieder oder Hebel.

Die Erhebungskurve 17 der Kurvenscheibe 11 (oder der Kulissenführung) kann auch einen Bereich aufweisen, der so geformt ist, dass das Abtastelement 14 in diesem Bereich eine stabile bzw. energiegünstige Lage einnimmt, sodass sich das zweite Übertragungsglied 8 also nicht selbsttätig, ohne äußere Kräfte in Richtung der ungebremsten Lage rückstellen kann. Das ist in Fig.1 z.B. am Ende der Erhebungskurve 17 der Kurvenscheibe 11 in Form einer Einbuchtung 20 vorgesehen. Kommt das Abtastelement 14 in dieser Einbuchtung zu liegen, kann sich das Abtastelement 14 ohne äußere Krafteinwirkung, z.B. durch den elektrischen Aktuator 12, einen Seilzug, oder ähnlichem, nicht alleine aus dieser Position wegbewegen. Das kann z.B. für eine Parkbremsfunktion genutzt werden.

Auch über eine Halteklinke kann eine Parkbremsfunktion realisiert werden. Wenn durch Betätigung der Betätigungseinrichtung 10 an einer bestimmten Position eine Halteklinke überfahren wird und einrastet, wird ebenfalls die Betätigungsposition (Parkposition) lagefixiert. Zum Entriegeln, also um z.B. eine Parkbremse zu lösen, muss die Haltklinke, z.B. wieder über Seilzug, gelöst werden. Dabei kann auch ein Elektromagnet zur Einrückung der Halteklinke gegen eine Feder dienen. Die Halteklinke bleibt dann in der Parkposition ohne Magnetwirkung durch Reibung verriegelt. Zum Lösen könnte die Betätigungseinrichtung 12 etwas weiterbewegt werden, womit die Reibung verringert wird und die Feder die Haltklinke löst.

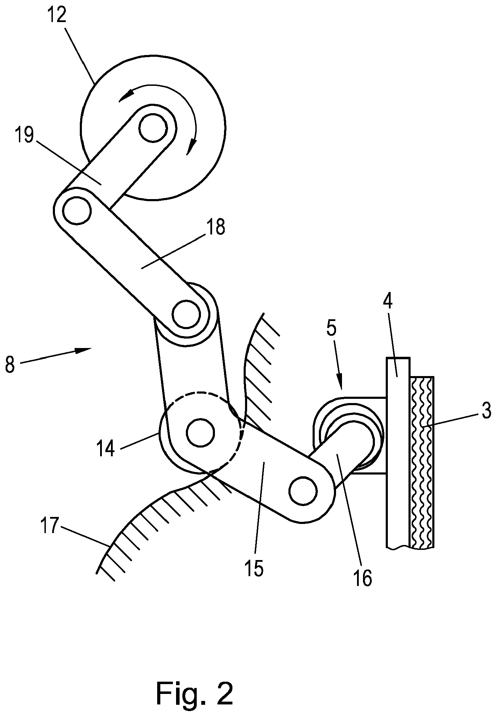

In einer alternativen Ausgestaltung der erfindungsgemäßen Reibungsbremse 1 nach Fig.2 ist am Koppelglied 15 wieder ein Abtastelement 14 drehbar gelagert angeordnet, das wiederum auf einer Erhebungskurve 17 des zweiten Übertragungsgliedes 8 abrollt. Das Koppelglied 15 ist hier als Kniehebel ausgeführt, wobei das Kniegelenk über das Abtastelement 14 an der Erhebungskurve 17 abrollt. An einem Schenkel des Koppelgliedes 15 ist wiederum ein Ende des Hebels 16 angelenkt, über den hier eine Nocke verdreht wird. Am anderen Schenkel des Koppelglied 15 greift hier ein Betätigungshebel 18 an, der über einen vom elektrischen Aktuator 12 angetriebenen Motorhebel 19 betätigt wird. Am Betätigungshebel 18 könnte aber auch ein Linearantrieb angreifen. Die Erhebungskurve 17 ist hier ortsfest angeordnet.

Ebenso sind auch andere Abrollführungen denkbar. Z.B. könnte auch das Abtastelement 14, die an der Erhebungskurve 17 abrollt, mit einer Kulissenführung oder einem Zapfen, der in einer Bohrung gleitet, geführt werden.

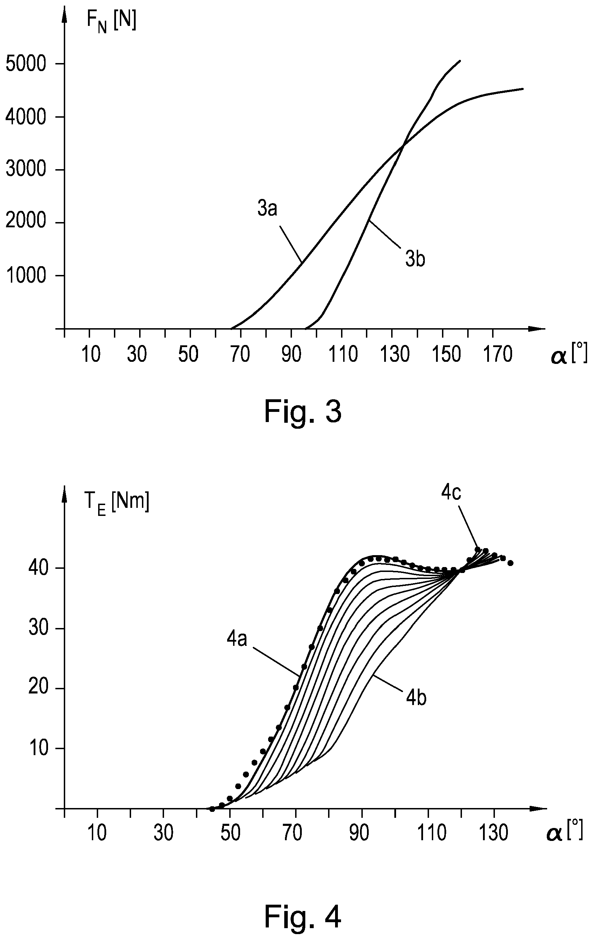

Der Ausgangspunkt für die Auslegung einer erfindungsgemäßen Reibungsbremse 1 kann z.B. ein vorgegebenes Belagsandrückkraft F_{N}-Betätigungsweg s Diagramm, oder ein Belagsandrückkraft F_{N}-Verdrehwinkel α Diagramm sein, wie in Fig.3 dargestellt. Das Diagramm kann einen linearen oder nichtlinearen (wie in Fig.3) Zusammenhang widergeben. Ein solches Diagramm ergibt sich z.B. aus dem grundlegenden Bremsendesign, das die Steifigkeiten der Bremsenteile und die Geometrie des ersten nichtlinearen Übertragungsglieds 5, also z.B. die geometrischen Verhältnisse am Exzenters, berücksichtigt und ist als bekannt anzusehen oder wird anwendungsbedingt vorgegeben. Dabei können auch unterschiedliche Verschleißzustände der Reibungsbremse 1 berücksichtigt werden. In Fig.3 zeigt die Kurve 3a die Bremse ohne Verschleiß und die Kurve b) die Bremse bei Vollverschleiß. Durch den Verschleiß des Bremsbelages 3 ändert sich die Steifigkeit der Reibungsbremse 1 signifikant. Ebenso könnte auch der Temperatureinfluss auf die Steifigkeit der Reibungsbremse berücksichtigt werden.

Aus diesem Belagsandrückkraft F_{N}-Verdrehwinkel α Diagramm kann dann aus den bekannten geometrischen Verhältnissen das benötigte Eingangsmoment T_{E} des ersten Übertragungsglieds 5 für die Erzielung der Belagsandrückkräfte F_{N} ermittelt werden, wie in Fig.4 dargestellt. Darin sind wieder unterschiedliche Verschleißzustände dargestellt, wobei die Kurve 4a wieder die Reibungsbremse 1 ohne Verschleiß und die Kurve 4b die Reibungsbremse 1 bei Vollverschleiß widerspiegelt. Um den Betrieb der Reibungsbremse 1 über den gesamten Verschleißzustand gewährleisten zu können, muss das Eingangsmoment T_{E} den Bereich abdecken, der durch die Hüllkurve (punktierte Kurve 4c) gegeben ist. Dieses Eingangsmoment T_{E} ist vom zweiten Übertragungsglied 8 aufzubringen, das entsprechend ausgelegt wird.

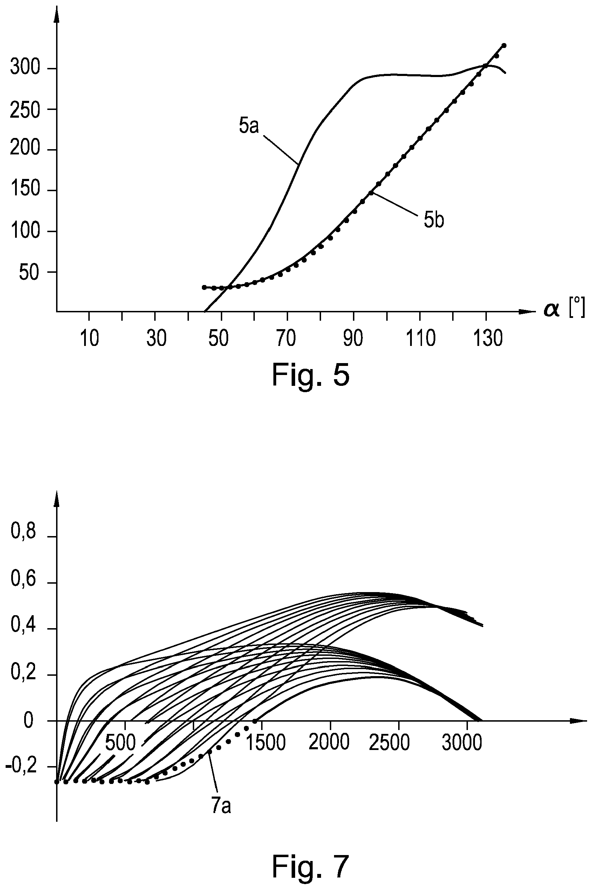

Für den elektrischen Aktuator 12 ist es aber besonders vorteilhaft, wenn dieser über den gesamten Betätigungsbereich mit einem möglichst konstanten Drehmoment (z.B. bei einem Elektromotor) oder mit konstanter Kraft, bevorzugt in einem Bereich mit hohem Wirkungsgrad, betrieben werden kann. Unter der Annahme eines gewünschten konstanten Drehmoments des Aktuators 12 stellt das Eingangsmoment T_{E}, bzw. die Hüllkurve in Fig.4 (umgelegt auf den Eingangsverdrehwinkel des zweiten Übertragungsgliedes 8), unmittelbar die benötigte Momentenübersetzungskennlinie (bzw. Kraftübersetzungskennlinie) im zweiten Übertragungsglied 8 dar. Da die lokale Momentenübersetzung aber der jeweiligen Steigung der Tangente der Wegübersetzungskennlinie entspricht, ergibt sich umgekehrt die Wegübersetzungskennlinie, und damit die Form der Erhebungskurve 17, als Integral der Momentenübersetzungskennlinie, wie in Fig.5 dargestellt. Darin zeigt die Kurve 5a die Momentenübersetzungskennlinie (Hüllkurve bei Berücksichtigung des Verschleißes) und die Kurve 5b das Integral dieser Kurve, also die Wegübersetzungskennlinie. Daraus kann die Form der Erhebungskurve 17 über den Verdrehwinkel α (Betätigungsweg) unmittelbar abgeleitet werden, um ein im Wesentlichen konstantes Drehmoment des elektrischen Aktuators 12 zu erzielen. Aus diesem Grund wird bevorzugt ein nichtlineares zweites Übertragungsglied 8 verwendet, dessen Erhebungskurve 17 entsprechend der Wegübersetzungskennlinie des ersten Übertragungsgliedes 5 geformt ist.

Für eine Reibungsbremse mit einem Getriebemotor und einem ersten Übertragungsglied nach der WO 2010/133 463 A1 wurde eine Betätigungszeit von ca. 250ms für eine Belagsandrückkraft von 40kN gemessen. Für eine Reibungsbremse 1 gemäß der gegenständlichen Erfindung konnte die Betätigungszeit auf ca. 180ms reduziert werden, was eine signifikante Verbesserung darstellt.

Bei vielen elektrisch betätigten Reibungsbremsen 1 ist gefordert, dass sie im energielosen Zustand (elektrischer Aktuator 12 ohne Strom) selbsttätig, ohne elektrische Hilfe in den ungebremsten Zustand aufgehen. Das kann bei hoher mechanischer Reibung im Antrieb der Reibungsbremse 1 unmöglich sein, weil bei einem elektrischer Aktuator 12 zuerst ein Losbrechmoment bzw. eine Losbrechkraft, das sich typischerweise aus mechanischen Lagerreibungen und dem magnetischen "Schnappen" zusammensetzt und das 10 % des Nennmoments bzw. der Nennkraft ausmachen kann, überwunden werden muss. Zudem muss bei einem Getriebemotor als elektrischer Aktuator 12 zum Lösen auch gegen die Getriebeübersetzung mit höherem Moment als auf der Motorwelle aufgedreht werden. Bei Reibungsbremsen 1 mit geringer mechanischer Antriebsreibung und/oder günstigem Verlauf der Betätigungskraft kann die Reibungsbremse 1 in bestimmten Bereichen durch die hohe Belagsandrückkraft selbst aufgedrückt werden. In allen Bereichen ist das aber nicht möglich, da z.B. bei sehr kleiner Belagsandrückkraft (z.B. Bremsung auf Eis oder Schnee) keine ausreichende Kraft zum Aufdrücken gegen das Losbrechmoment vorhanden ist. In diesem Zustand muss eine nicht-elektrische, speicherbare Hilfsenergie zum Aufdrücken der Reibungsbremse 1 vorhanden sein Das kann z.B. eine Lösefeder sein, die beim Bremsen gespannt wird und die die gespeicherte Energie zum Aufdrücken der Reibungsbremse 1 im Bedarfsfall wieder abgibt.

Wenn die Hilfsenergie aus der Betätigung der Reibungsbremse 1 selbst versorgt wird, z.B. über eine Lösefeder, die bei Bremsbetätigung aufgezogen wird, ist die Gesamtbetätigungskraft (bzw. das Gesamtbetätigungsmoment) um diese Federwirkung höher. Die Energie wäre zwar nicht verloren, weil sie spätestens beim Lösen der Reibungsbremse 1 wieder entnommen wird, aber sie erhöht trotzdem den Antriebsmomentbedarf. Die Lösefeder würde also im einfachsten Fall andauernd über ihre Federkennlinie wirksam sein und damit auch im Bereich großer Betätigungsmomente zusätzlich wirksam werden, obwohl die Lösefeder in solchen Bereichen zum Aufdrücken der Reibungsbremse 1 überhaupt nicht nötig wäre. Dem kann mit einem nichtlinearen Getriebe für die Lösefeder entgegen gewirkt werden, indem die Lösefeder mittels eines geeignet ausgelegten nichtlinearen Getriebes betätigt wird, z.B. eine über eine Federnocke 22 wirkende Lösefeder 21, wie nachfolgend mit Bezugnahme auf Fig.6 beschrieben. Das nichtlineare Getriebe wird dabei von der Betätigungseinrichtung 10 mit angetrieben.

An einer Betätigungswelle 6 ist eine Federnocke 22 angeordnet, die mit der Betätigungswelle 6 mitgedreht wird. Ein Federhebel 23 ist an einem Ende drehbar gelagert angeordnet. Am anderen Ende des Federhebels 23 ist ein Federabtastelement 24, hier z.B. eine drehbar gelagerte Rolle, angeordnet, wobei das Federabtastelement 24 die Federnocke 22 abtastet, hier darauf abrollt. Kinematisch ist also wieder ein Rollenschlepphebel realisiert. Am Federhebel 23 greift eine Lösefeder 21 an. Wird die Federnocke 22 verdreht, so wird der Federhebel 23 um einen Winkel β verschwenkt und die Lösefeder 21 somit gespannt.

Die Lösefeder 21 kann aber auch ohne Federnocke 22 direkt am ersten Übertragungsglied 5 oder zweiten Übertragungsglied 8 angreifen und die Reibungsbremse 1 lösen und/oder in der Betätigung unterstützen. Die Lösefeder 21 kann z.B. an einem Hebel 16 oder am Parallelogrammantrieb ziehen oder drücken. Durch die Wahl der Geometrie (Angriffspunkt der Lösefeder 21 an der Betätigungseinrichtung 10 und/oder an der Reibungsbremse 1) kann die Lösefeder 21 veränderliche Momente in die Bremsbetätigung einbringen, die während der Betätigung der Reibungsbremse 1 auch Größe und Vorzeichen ändern können. Z.B. kann das Rückstellfedermoment durch die Lösefeder 21 und die Geometrie bei größer werdendem Verdrehwinkel α kleiner werden, das Vorzeichen wechseln und mit größer werdendem Verdrehwinkel α größer werden.

Diese Lösefederwirkung, wie auch immer sie genau entsteht (Nocke, direkter Angriff der Lösefeder 21, usw.) kann auch an verschiedenen Stellen der Reibungsbremse 1 bewirkt werden, nicht nur an der Betätigungswelle 6 oder dem Hebel 16 oder dem Parallelogramm, sondern z.B. auch an der Kurvenscheibe 11, der Welle des elektrischen Aktuators 12, an Getriebestufen des elektrischen Aktuators 12, an einem eigenen Getriebe, etc. Kurzum an jeder Stelle der Betätigungseinrichtung 10 über die durch eine Lösefeder 21 Rückstellwirkung und/oder Betätigungswirkung eingebracht werden kann.

Die Lösefeder 21 kann auch aus- oder einkuppelbar sein, z.B. mittels Elektromagnete, um z.B. im stromlosen Zustand keine Betätigungswirkung auszuüben, beispielsweise wenn die stromlose Reibungsbremse 1 zwangsweise in den gelösten Zustand gehen soll.

Das oben beschriebene Verfahren zur Ermittlung einer günstigen Wegübersetzungskennlinie des zweiten Übertragungsgliedes 8 bewertet keine Herkunft der Kraft (Moment). Daher kann die Lösefeder 21, die zum Aufdrücken der Reibungsbremse 1 ganz oder fallweise nötig ist, einfach als zusätzliche Kraft eingesetzt werden. Damit erhält man eine gesamte Wegübersetzungskennlinie inklusive Lösefeder 21 zur Gestaltung der Übersetzung der Betätigungseinrichtung 10. Für die Bestimmung der Erhebungskurve der Federnocke 24 kann nun wie bereits beschrieben vorgegangen werden.

In Fig.7 ist das Moment, das die Reibungsbremse 1 aus ihrer inneren Belagsandrückkraft über den Betätigungsbereich des elektrischen Aktuators 12 auf diesen auswirkt. Im Bereich kleiner Betätigungswinkel ist das Moment negativ, d.h. dieses negative Moment fehlt, um die Reibungsbremse 1 selbsttätig rückzustellen. Wiederum wird ein Kennfeld über relevante Zustände verwendet, das alle Belagsverschleißsituationen, Temperaturen und sonstige Einflüsse abdeckt. Die punktierte Hüllkurve 7a ist demnach der Bereich der fehlenden Lösemomente und muss durch Hilfsenergie (z.B. Lösefeder 21) zugeführt werden. Durch den Verlauf des Lösemoments (Hüllkurve 7a) und der gegebenen Kinematik ist damit auch die Nockenerhebung der Federnocke 22 festgelegt. Die Lösefeder 21 wird damit nur dort gespannt, wo sie als Rückstellhilfe gebraucht wird. Fällt in diesem Verdrehwinkelbereich die elektrische Stromversorgung aus, so wird die Reibungsbremse durch die Lösefeder 21 sicher geöffnet. Außerhalb dieses Bereiches bewirkt das Entspannen der Lösefeder 21 eine Unterstützung des elektrischen Aktuators 12 für den Betätigungsvorgang der Reibungsbremse. Dadurch wird die sonst störende Lösefeder 21 plötzlich zur Unterstützung der Betätigung der Reibungsbremse 1.

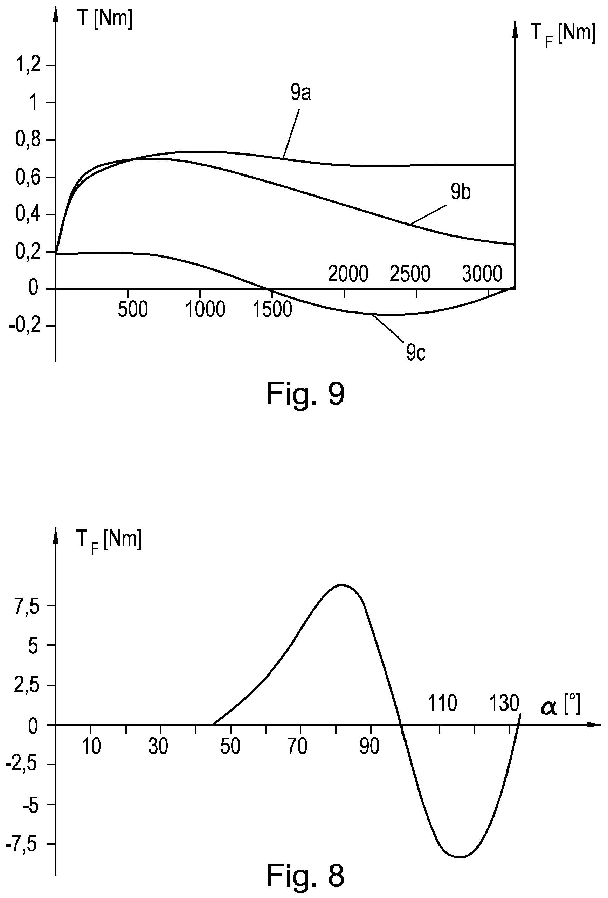

Das Ergebnis ist in Fig.8 dargestellt, die den Verlauf des Rückstellfedermoments T_{F} über den Verdrehwinkel der Federnocke 22 zeigt. Das Rückstellfedermoment T_{F} wirkt bei kleiner Bremsbetätigung wie die innere Kraft aus der Reibungsbremse 1 zum Rückstellen der Reibungsbremse 1. Bei stärkerer Bremsung (größerem Verdrehwinkel) wird die Lösefeder 21 wieder entspannt, um den elektrischen Aktuator 12 bei Bremsbetätigung zu unterstützen.

Die Übersetzungen der Betätigungseinrichtung 10 und der Lösefeder 21 beeinflussen sich gegenseitig. Daher wird eine solche Reibungsbremse 1 in der Regel in einem iterativen Prozess entworfen, bei dem die Optimierungsschritte wiederholt werden, bis das Verbesserungspotential weitgehend ausgeschöpft ist. Dabei könnte man bei der neuen Auslegung einer Reibungsbremse 1 auch von einer bereits bekannten günstigen Lösefeder 21 mit Übersetzung oder von einer bereits bekannten linearen oder nichtlineare Übersetzung der Betätigungseinrichtung 10 ausgehen.

Das Ergebnis einer solchen Optimierung ist z.B. in Fig.9 dargestellt. Dabei sind über den Betätigungsbereich des elektrischen Aktuators das Drehmoment T des elektrischen Aktuators 12 (Kurve 9a) und das Rückstellfedermoment T_{F} der Lösefeder 21 (Kurve 9c) aufgetragen. Hier ist das erzielte, über den Betätigungsbereich im Wesentlichen konstante Drehmoment T des elektrischen Aktuators 12 gut zu erkennen. Die Kurve 9b berücksichtigt zusätzlich noch Selbstverstärkungseffekte der Reibungsbremse 1, wodurch das notwendige Drehmomente T des elektrischen Aktuators 12 natürlich sinkt.

Die erfindungsgemäße Reibungsbremse 1 wurde oben am Beispiel einer Bremse beschrieben, bei der aktiv Kraft (Moment) aufgebracht werden muss, um die Bremsbeläge anzudrücken, wie z.B. im KFZ erforderlich. Allerdings ist die Wirkrichtung des elektrischen Aktuators 12 für die Erfindung unerheblich. Der elektrische Aktuator 12 kann auch mit aktiver Kraft (Moment) die Reibungsbremse 1 an der Betätigung hindern, womit die Wirkrichtung umgekehrt wäre. Die Energie zur Betätigung der Reibungsbremse 1 kann in diesem Fall aus einer Hilfsenergiequelle, wie z.B. eine Feder, stammen. Eine solche Reibungsbremse 1 wird z.B. als Eisenbahnbremse, Aufzugsbremse, Kranbremse, etc., die bei Stromausfall bremsen muss, eingesetzt. Dabei kann die vorhin beschriebene Lösefeder 21 auch als Hilfsenergiequelle zum Bremsen eingesetzt werden, wobei die Betätigungskurve für die Lösefeder 21 dann natürlich günstig für das Betätigungsverhalten der Bremse ausgelegt wird. Bei einer solchen Reibungsbremse 1 kann die Kinematik so ausgelegt werden, dass im geöffnet zu haltendem Bereich die Kraft (Moment) am elektrischen Aktuator 12 möglichst klein oder sogar Null wird. Das kann ähnlich wie oben für die Parkbremsfunktion beschrieben über einen besonderen Bereich der Kurvenscheibe, Kulisse oder Kinematik erfolgen. Auch eine beschriebene Halteklinke könnte zum geöffnet Halten der Reibungsbremse 1 dienen.

Bei Reibungsbremsen 1, die vom elektrischen Aktuator 12 gelöst gehalten werden, z.B. bei einer Eisenbahnbremse oder einer Aufzugsbremse, kann eine Feder, und/oder die Lösefeder 21, natürlich umgekehrt zum Betätigen der Reibungsbremse 1 eingesetzt werden. Dann kann die Feder bzw. die Kinematik der Betätigungseinrichtung 10 auch günstig für dieses umgekehrte Betätigungsverhalten ausgelegt werden. Bei diesen federbetätigten Reibungsbremsen 1 wird die Betätigungseinrichtung 10 vorteilhafter Weise so ausgelegt, dass für alle abzudeckenden Fälle (verschiedene oder keine Selbstverstärkung, verschiedene Belagszustände und Elastizitäten, verschiedene Reibbeiwerte, Toleranzen, Rückdrehmoment des Motors ("cogging") in verschiedenen Motorzuständen (auch stromlos), verschiedenen Reibungsverlusten in der Betätigung, Temperatur, usw.) immer eine sichere Betätigung durch die Feder möglich ist.

## Patentansprüche

1. Elektrisch betätigte Reibungsbremse mit einem von einer Betätigungseinrichtung (10) betätigten Bremsbelag (3), wobei die Betätigungseinrichtung (10) von einem elektrischen Aktuator (12) angetrieben ist, und ein erstes Übertragungsglied (5) umfasst, das mit dem Bremsbelag (3) verbunden ist und die Betätigungseinrichtung (10) für eine Bremsung zur Erzielung einer Belagsandrückkraft (F_{N}) das erste Übertragungsglied (5) um einen Verdrehwinkel (α) verdreht und das erste Übertragungsglied (5) zur Erzielung der Belagsandrückkraft (F_{N}) in Abhängigkeit vom Verdrehwinkel (α) ein Eingangsmoment (T_{E}) benötigt, **dadurch gekennzeichnet, dass** ein zweites Übertragungsglied (8) mit einer Erhebungskurve (17) vorgesehen ist und am ersten Übertragungsglied (5) ein Koppelglied (15) vorgesehen ist, wobei am Koppelglied (15) ein Abtastelement (14) angeordnet ist, das die Erhebungskurve (17) unter Wirkung des elektrischen Aktuators (12) zur Betätigung des ersten Übertragungsgliedes (5) abtastet, wobei das zweite Übertragungsglied (8) das Eingangsmoment (T_{E}) für das erste Übertragungsglied (5) aufbringt **und dass** die Eingangsmomente (T_{E}) des ersten Übertragungsgliedes (5) über den Verdrehwinkel (α) für unterschiedliche Verschleißzustände des Bremsbelags (3) eine Hüllkurve (4c) ergeben, welche die maximalen Werte der benötigten Eingangsmomente (TE) darstellt, und das vom zweiten Übertragungsglied (8) aufgebrachte Eingangsmoment (T_{E}) über den Verdrehwinkel (α) gleich oder unterhalb der Hüllkurve (4c) liegt, um die unterschiedlichen Verschleißzustände des Bremsbelags (3) abzudecken.

2. Elektrisch betätigte Reibungsbremse nach Anspruch 1, **dadurch gekennzeichnet, dass** am Koppelglied (15) ein erstes Ende eines Hebels (16) drehbar gelagert angeordnet ist und ein zweites Ende des Hebels (16) mit dem ersten Übertragungsglied (5) verbunden ist.

3. Elektrisch betätigte Reibungsbremse nach Anspruch 1 oder 2, **dadurch gekennzeichnet, dass** das zweite Übertragungsglied (8) als Kurvenscheibe (11) oder als Kulissenführung mit der Erhebungskurve (17) ausgeführt ist und der elektrische Aktuator (12) die Kurvenscheibe (11) oder die Kulissenführung verdreht.

4. Elektrisch betätigte Reibungsbremse nach Anspruch 2 oder 3, **dadurch gekennzeichnet, dass** zwei erste Übertragungsglieder (5) vorgesehen sind, die zur Ausbildung eines Parallelogrammantriebes jeweils über einen Hebel (16) mit dem Koppelglied (15) verbunden sind.

5. Elektrisch betätigte Reibungsbremse nach Anspruch 1 oder 2, **dadurch gekennzeichnet, dass** das Koppelglied (15) als Kniehebel ausgeführt ist, dessen Kniegelenk über das Abtastelement (14) entlang der Erhebungskurve (17) geführt ist, an einem ersten Schenkel des Kniehebels der elektrische Aktuator (12) angreift und der andere Schenkel des Kniehebels mit dem ersten Übertragungsglied (5) verbunden ist.

6. Elektrisch betätigte Reibungsbremse nach einem der Ansprüche 1 bis 5, **dadurch gekennzeichnet, dass** in der Erhebungskurve (17) eine Einbuchtung vorgesehen ist, in der das Abtastelement (14) eine stabile Lage einnimmt.

7. Elektrisch betätigte Reibungsbremse nach einem der Ansprüche 1 bis 6, **dadurch gekennzeichnet, dass** das erste Übertragungsglied (5) als Exzenterantrieb oder als Nockenantrieb ausgeführt ist.

8. Elektrisch betätigte Reibungsbremse nach einem der Ansprüche 1 bis 7, **dadurch gekennzeichnet, dass** die Erhebungskurve (17) entsprechend der Wegübersetzungskennlinie des ersten Übertragungsgliedes (5) geformt ist.

9. Elektrisch betätigte Reibungsbremse nach einem der Ansprüche 1 bis 8, **dadurch gekennzeichnet, dass** eine Lösefeder (21) vorgesehen ist, die auf die Betätigungseinrichtung (10) wirkt.

10. Elektrisch betätigte Reibungsbremse nach Anspruch 9, **dadurch gekennzeichnet, dass** am ersten Übertragungsglied (5) eine Federnocke (22) vorgesehen ist, die die Lösefeder (21) über ein Federabtastelement (24) spannt oder entspannt.

## Claims

1. An electrically actuated friction brake with a brake pad (3) actuated by an actuation device (10), wherein the actuation device (10) is driven by an electrical actuator (12) and comprises a first transmission element (5) that is connected to the brake pad (3) and the actuation device (10) rotates the first transmission element (5) about a rotational angle (α) for a brake action to achieve a pad pressing force (F_{N}) and the first transmission element (5) requires an input torque (T_{E}) depending on the rotational angle (α) for achieving the pad pressing force (F_{N}), **characterized in that** a second transmission element (8) with an elevation curve (17) is provided and a coupling element (15) is provided on the first transmission element (5), wherein a follower element (14) is arranged on the coupling element (15) that follows the elevation curve (17) under the action of the electrical actuator (12) for actuating the first transmission element (5), wherein the second transmission element (8) provides the input torque (T_{E}) for the first transmission element (5) **and in that** the input torques (T_{E}) of the first transmission element (5) over the rotational angle (α) for different wear states of the brake pad (3) result in an envelope curve (4c), which represents the maximum values of the required input torques (T_{E}), and the input torque (T_{E}) provided by the second transmission element (8) over the rotational angle (α) is equal to or below the envelope curve (4c) in order to cover the different wear states of the brake pad (3).

2. The electrically actuated friction brake according to claim 1, **characterized in that** a first end of a lever (16) is rotatably mounted on the coupling element (15), and a second end of the lever (16) is connected to the first transmission element (5).

3. The electrically actuated friction brake according to claim 1 or 2, **characterized in that** the second transmission element (8) is embodied as a cam disc (11) or as a sliding guide with elevation curve (17), and the electrical actuator (12) rotates the cam disc (11) or the sliding guide.

4. The electrically actuated friction brake according to claim 2 or 3, **characterized in that** two first transmission elements (5) are provided, each of which is connected via a lever (16) to the coupling element (15) for formation of a parallelogram drive.

5. The electrically actuated friction brake according to claim 1 or 2, **characterized in that** the coupling element (15) is designed as a rocker lever, the knee joint of which is guided by the follower element (14) along the elevation curve (17), the electrical actuator (12) acts on a first leg of the rocker lever, and the other leg of the rocker lever is connected to the first transmission element (5).

6. The electrically actuated friction brake according to one of claims 1 to 5, **characterized in that** an indentation is provided in the elevation curve (17), in which the follower element (14) assumes a stable position.

7. The electrically actuated friction brake according to one of claims 1 to 6, **characterized in that** the first transmission element (5) is designed as an eccentric drive or as a cam drive.

8. The electrically actuated friction brake according to one of claims 1 to 7, **characterized in that** the elevation curve (17) is formed according to the path translation characteristic of the first transmission element (5).

9. The electrically actuated friction brake according to one of claims 1 to 8, **characterized in that** a release spring (21) is provided that acts on the actuation device (10).

10. The electrically actuated friction brake according to claim 9, **characterized in that** a spring cam (22) is provided on the first transmission element (5) which tensions or releases the release spring (21) via a spring follower element (24).

## Revendications

1. Frein à friction à commande électrique comportant une garniture de frein (3) actionnée par un dispositif d'actionnement (10), le dispositif d'actionnement (10) étant entraîné par un actionneur électrique (12) et comprenant un premier élément de transmission (5) relié à la garniture de frein (3) et le dispositif d'actionnement (10) faisant tourner le premier élément de transmission (5) suivant un angle de rotation (α) pour un freinage permettant d'obtenir une force de pression de garniture (F_{N}) et le premier élément de transmission (5) nécessitant un couple d'entrée (T_{E}) pour atteindre la force de pression de garniture (F_{N}) en fonction de l'angle de rotation (α), **caractérisé en ce qu'**un second élément de transmission (8) est pourvu d'une courbe d'élévation (17) **en ce qu'**un élément d'accouplement (15) est prévu sur le premier élément de transmission (5), un élément détecteur (14) étant disposé sur l'élément d'accouplement (15), lequel élément palpeur détecte la courbe d'élévation (17) sous l'action de l'actionneur électrique (12) pour actionner le premier élément de transmission (5), le second élément de transmission (8) appliquant le couple d'entrée (T_{E}) pour le premier élément de transmission (5) et **en ce que** les couples d'entrée (T_{E}) du premier élément de transmission (5) produisent une courbe enveloppante (4c) sur l'angle de rotation (α) pour différentes conditions d'usure de la garniture de frein (3), laquelle courbe enveloppante représente les valeurs maximales des couples d'entrée (T_{E}) requis, et le couple d'entrée (T_{E}) appliqué par le second élément de transmission (8) sur l'angle de rotation (α) étant égal ou inférieur à la courbe enveloppante (4c) pour recouvrir les différentes conditions d'usure de la garniture de frein (3).

2. Frein à friction à commande électrique selon la revendication 1, **caractérisé en ce qu'**une première extrémité d'un levier (16) est montée en rotation sur l'élément d'accouplement (15) et qu'une seconde extrémité du levier (16) est reliée au premier élément de transmission (5).

3. Frein à friction à commande électrique selon la revendication 1 ou 2, **caractérisé en ce que** le second élément de transmission (8) est réalisé sous la forme d'un disque à courbe (11) ou sous la forme d'un guide à coulisse comportant la courbe d'élévation (17), et **en ce que** l'actionneur électrique (12) fait tourner le disque à courbe (11) ou le guide à coulisse.

4. Frein à friction à commande électrique selon la revendication 2 ou 3, **caractérisé en ce que** deux premiers éléments de transmission (5) sont prévus, lesquels sont chacun reliés à l'élément d'accouplement (15) par l'intermédiaire d'un levier (16) pour former un dispositif d'entraînement en parallélogramme.

5. Frein à friction à commande électrique selon la revendication 1 ou 2, **caractérisé en ce que** l'élément d'accouplement (15) est réalisé sous la forme d'un levier à genouillère, dont l'articulation à genouillère est guidée le long de la courbe d'élévation (17) par l'intermédiaire de l'élément détecteur (14), vient en prise sur une première branche du levier à genouillère de l'actionneur électrique (12), l'autre branche du levier à genouillère étant reliée au premier élément de transmission (5).

6. Frein à friction à commande électrique selon l'une des revendications 1 et 5, **caractérisé en ce qu'**un évidement est prévu dans la courbe d'élévation (17), évidement dans lequel l'élément détecteur (14) prend une position stable.

7. Frein à friction à commande électrique selon l'une des revendications 1 à 6, **caractérisé en ce que** le premier élément de transmission (5) est réalisé sous la forme d'un dispositif d'entraînement excentrique ou d'un dispositif d'entraînement à came.

8. Frein à friction à commande électrique selon l'une des revendications 1 à 7, **caractérisé en ce que** la courbe d'élévation (17) est formée selon la caractéristique de rapport de démultiplication du premier élément de transmission (5).

9. Frein à friction à commande électrique selon l'une des revendications 1 à 8, **caractérisé en ce qu'**un ressort de libération (21) est prévu, lequel agit sur le dispositif d'actionnement (10).

10. Frein à friction à commande électrique selon la revendication 9, **caractérisé en ce qu'**une came à ressort (22) est prévue sur le premier élément de transmission (5), laquelle came tend ou détend le ressort de libération (21) par l'intermédiaire d'un élément détecteur de ressort (24).
